# EUROPÄISCHE PATENTSCHRIFT

(11) **EP 3 869 108 B1**
(45) Veröffentlichungstag und Bekanntmachung des Hinweises auf die Patenterteilung: **09.03.2022**
(21) Anmeldenummer: 20158153.5
(22) Anmeldetag: 19.02.2020
(51) Int. Cl.: F24D 3/14

(54) **FUSSBODENHEIZUNGSSYSTEM**
FLOOR HEATING SYSTEM
SYSTÈME DE CHAUFFAGE DU SOL

(43) Veröffentlichungstag der Anmeldung: 25.08.2021
(73) Patentinhaber: Türedioglu, Yücel, 52351 Düren (DE)
(72) Erfinder: Türedioglu, Yücel, 52351 Düren (DE)
(74) Vertreter: Bauer, Dirk

(56) Entgegenhaltungen:
- EP-A1- 0 040 681
- AT-B- 342 248
- DE-A1- 3 101 096
- DE-A1- 10 150 217
- DE-U1- 29 900 359

## Beschreibung

Die Erfindung betrifft ein Fußbodenheizungssystem gemäß dem Oberbegriff des Anspruchs 1. Solch ein Fußbodenheizungssystem ist beispielsweise aus der DE 299 00 359 U1 bekannt.

### Stand der Technik

Bei dem Fußbodenheizungssystem gemäß der vorliegenden Anmeldung handelt es sich um ein sogenanntes Nasssystem, bei dem das Estrichmaterial in fließfähiger Form eingebracht wird, nachdem zuvor die Heizungsrohre auf oder in der unteren Platte so verlegt und zumindest temporär derart fixiert worden sind, dass beim Einfüllen und Verteilen sowie Glätten des Estrichmaterials zu einer Estrichschicht mit ebener Oberfläche eine Verschiebung der Heizungsrohre relativ zu der unteren Platte verhindert wird. Typischerweise besitzen die unteren Platten eine rechteckförmige oder quadratische Grundfläche und werden in der benötigten Anzahl nebeneinander flächig auf der Unterkonstruktion verlegt, um die mit der Fußbodenheizung zu bestückende Fläche zu bedecken. Die Heizungsrohre verlaufen typischerweise mäanderförmig und erstrecken sich über eine Vielzahl von Platten, ohne dass Verbindungstellen im Bereich der Grenzen zwischen den Platten ausgebildet würden. Solche Verbindungsstellen werden als potentielle Undichtigkeitsstellen, soweit möglich, vermieden. Alternativ kommt für die anmeldungsgemäße Fußbodenheizung auch ein harfenförmiger Verlauf der Heizungsrohre in Betracht, wo Verzweigungsstellen in einem Verteilrohr vorliegen und sich der Heiz- oder Kühlmittelstrom in eine Mehrzahl parallel durchflossener Heizungsrohre aufteilt und später in einem Sammelrohr wieder vereinigt.

Die Unterkonstruktion wird meist durch eine unmittelbar unter der unteren Platte befindliche Dämmschicht, z.B. aus Polystyrol-Hartschaum, gebildet, die sich nach unten hin wiederum auf einer Rohbaudecke, z.B. aus Beton, abstützt.

Aus der EP 0 637 720 A1 ist eine Fußbodenheizung bekannt, bei der zwei spiegelbildlich aufeinander gelegte und miteinander verrastende Platten, die z.B. aus tiefgezogenen Kunststoffplatten bestehen, vorgesehen sind. Zwischen den beiden Kunststoffplatten sind die Heizungsrohre verlegt und durch die Geometrie der ineinander eingreifenden Platten fixiert. Eine Estrichschicht ist bei dieser vorbekannten Fußbodenheizung nicht vorgesehen, um aufgrund geringer Massen und damit kleiner Wärmespeicherkapazitäten die Ansprechzeit zu verkürzen und einen hohen Wirkungsgrad zu erzielen.

Aus der DE 19 29 529 A1 ist darüber hinaus eine Fußbodenheizung bekannt, bei der die Heizungsrohre zwischen einer Deckplatte aus wärmeleitendem Baustoff und einer Grundplatte angeordnet sind, die wiederum mit nach oben vorstehenden Nocken versehen ist. Zusätzlich ist bei diesen Fußbodenheizungssystemen eine wärmeleitende Schicht zwischen den beiden Platten vorgesehen.

Nachteilig tritt bei den bekannten mit einer Estrichschicht versehenen Fußbodenheizungssystemen der Umstand in Erscheinung, dass die Ansprechzeit - zum einen bedingt durch die hohe Wärmespeicherkapazität des Estichmaterials - groß ist, was zu Komforteinbußen führt, das Regelverhalten verschlechtert und damit auch den Energieverbrauch solcher Heizungssysteme erhöht.

Ferner ist aus der DE 31 01 096 A1 ein Fußbodenheizungssystem bekannt, bei dem die Halter als Ringe mit hufeisenförmigen Aussparungen ausgebildet sind. Dabei sind acht Aussparungen über den Umfang gleichmäßig verteilt angeordnet und nach außen offen, so dass dort die Heizrohre eingeclipst werden können.

Aus der AT 342 248 A1 geht ein vorgefertigtes Bauelement für eine Flächenheizung hervor, das mit Vertiefungen ausgestattet ist, in denen Heizrohre in vorbestimmten Anordnungen eingelegt und befestigt werden können.

Schließlich ist aus der EP 0 040 681 A1 ein Befestigungssystem für Heizrohre von Fußbodenheizungen bekannt, bei dem über einer wärmedämmenden Schicht eine Lage eines dünnschichtigen Kunststofffolien-Materials aufgelegt wird.

### Aufgabe

Der Erfindung liegt die Aufgabe zugrunde, ein mit einer Estrichschicht versehenes Fußbodenheizungssystem bereitzustellen, bei dem die Ansprechzeit verkürzt und die Regelbarkeit des Systems somit verbessert wird.

### Lösung

Ausgehend von einem Fußbodenheizungssystem der eingangs beschriebenen Art, wird diese Aufgabe erfindungsgemäß durch Aufnahmemittel der Abstandhalter gelöst, mit denen die Heizungsrohre so positionierbar sind, dass ihre Oberseiten mit Hochpunkten oder Hochbereichen der Abstandhalter bündig sind, oder über Hochpunkte oder Hochbereiche der Abstandhalter nach oben vorstehen.

Die erfindungsgemäße Lösung bietet den Vorteil, dass die Heizungsrohre, die am weitesten oben gelegenen Bauteile des Gesamtsystems bilden und es daher möglich ist, die Estrichschicht so auszubilden, dass die Heizungsrohre "gerade so" darin eingebettet sind, d.h. dass sich nur eine minimale Überdeckung der Heizungsrohre mit dem Estrichmaterial ergibt. Die über die Heizungsrohre eingebrachte Wärme (bzw. Kälte) muss daher nur eine sehr kurze Wegstrecke zurücklegen, um an die Oberseite des Fußbodenheizungssystems in Form der Oberfläche der Estrichschicht zu gelangen und von dort über den aufliegenden Fußbodenbelag (sofern vorhanden) in den zu temperierenden Raum zu gelangen. Dadurch wird im Gegensatz zu bekannten Systemen die Ansprechzeit verkürzt und das Regelverhalten verbessert, da auf die bekannten großen Dicken der Estrichschicht oberhalb der Heizungsrohre verzichtet wird. Um gleichwohl trotz der fehlenden (statisch wirksamen) Überdeckung der Heizungsrohre auf deren Oberseite eine hinreichende Festigkeit und Steifigkeit der Estrichschicht zu erhalten, wird diese in einem Bereich unterhalb der Unterseite der Heizungsrohre und oberhalb der Oberseite der unteren Platte hinreichend stark, d.h. mit einer hinreichenden Dicke, gewählt, um Brüche, Risse oder dergleichen zu verhindern und über die gesamte Lebensdauer des Systems eine hinreichende Festigkeit zu bewerkstelligen. Mit dem erfindungsgemäßen System wird somit Estrichdicke oberhalb der Heizungsrohre eingespart und - erforderlichenfalls - gegenüber bekannten Systemen die Estrichdicke unterhalb der Heizungsrohre und zwischen denselben mit einer solch großen Dicke versehen, dass die Festigkeitserfordernisse erfüllt werden.

Um eine Wärmeabgabe aus dem Fußbodenheizungssystem nach unten möglichst zu unterbinden und somit die Wärmeabgabe in den zu temperierenden Raum zu maximieren, ist unterhalb der unteren Platte eine Dämmschicht bspw. aus Polystyrol-Hartschaum oder anderen bekannten Fußboden-Dämmmaterialien vorhanden.

Vorzugsweise sind die Aufnahmemittel Aussparungen in den Abstandshaltern, die einem Querschnitt der Heizungsrohre angepasst sind. In diesem Fall kann eine Fixierung der Heizungsrohre vor dem Einbringen der im Verarbeitungszustand zunächst fließfähigen Estrichschicht durch einfaches Einlegen oder Einklipsen oder Festklemmen der Heizungsrohre in die Aussparungen erfolgen.

Die Erfindung weiter ausgestaltend ist vorgesehen, dass die Abstandshalter rippen- oder stegförmig und in zueinander parallelen Reihen angeordnet sind. In diesem Fall können die Heizungsrohre senkrecht zu den parallelen Reihen verlaufen und in geeigneten Abständen (Reihenabstand) an der Platte fixiert werden.

Um hinsichtlich der Verlegerichtung der Heizungsrohre hinreichende Freiheit zu besitzen und insbesondere auch in Räumen mit Ecken, Nischen oder sonstigen unregelmäßigen Formen ein gut passendes Verlegemuster der Heizungsrohre realisieren zu können, sollten vorzugsweise die Heizungsrohre einer ersten Gruppe von zueinander parallelen Reihen senkrecht zu den Heizungsrohren einer zweiten Gruppe von zueinander parallelen Reihen ausgerichtet sein. In diesem Falle sind zwei Verlegerichtungen der Heizungsrohre denkbar, nämlich zwei zueinander senkrecht stehende Richtungen. Vorzugsweise sollten die Reihen der Abstandshalter der beiden Gruppen in Kreuzungsbereichen miteinander verbunden sein, um eine gute Festigkeit des Gesamtsystems d.h. insbesondere der Abstandhalter zueinander, zu erreichen.

Eine weitere Ausführungsform der erfindungsgemäßen Fußbodenheizung besteht darin, dass zusätzlich zu der unteren Platte auch eine obere Platte vorhanden ist, die sich mittels Stützen auf der unteren Platte abstützt und gitterförmig verlaufende Streifen aufweist, die Durchbrüche begrenzen und die Aufnahmemittel für die Heizungsrohre aufweisen, wobei die obere Platte und die Stützen gemeinsam die Abstandhalter bilden. Die obere Platte ist somit insofern unvollkommen, als sie eine Vielzahl rasterförmig in senkrecht zueinanderstehenden Reihen angeordnete, vorzugsweise quadratische, Durchbrüche besitzt, die sich zum Einleiten und Verteilen des fließfähigen Estrichmaterials anbieten.

Die Ausformung der Aufnahmemittel aus der oberen Platte ist besonders einfach, wenn die Aufnahmemittel bogenförmig verlaufen und Abschnitte der Streifen sind. Die Ausformung sowohl der oberen als auch der unteren Platte kann jeweils für sich mittels des bekannten und bewährten Tiefziehverfahrens unter Verwendung plattenförmiger thermoplastischer Kunststoffmaterialien (PE, PP, ABS etc.) erfolgen.

Die Anzahl der insgesamt benötigten Bauteile wird ebenso wie der Aufwand zur Montage und Vorbereitung der Estrich-Einbringung reduziert, wenn die Abstandhalter insgesamt oder die Stützen einstückig mit der unteren Platte verbunden sind. Auch sollte die obere Platte insbesondere formschlüssig mit den Stützen verbunden sein, um einerseits die Montagesicherheit zu erhöhen und andererseits die Gefahr eines unbeabsichtigten Ablösens während des Vorgangs des Einbringens des fließfähigen Estrichs zu vermindern.

Die Erfindung wird nachfolgend anhand zweier Ausführungsbeispiele, die in den Zeichnungen dargestellt sind, näher erläutert. Es zeigt:
- Fig. 1:: Eine perspektivische Ansicht einer ersten Ausführungsform eines Fußbodenheizungssystems, jedoch vor der Einbringung des Estrichmaterials,
- Fig. 1a:: eine Ansicht einer Stütze,
- Fig. 2:: einen Vertikalschnitt durch das Fußbodenheizungssystems gemäß Fig1, ebenfalls ohne Estrichmaterial,
- Fig. 3:: eine Draufsicht auf eine zweite Ausführungsform eines Fußbodenheizungssystems ohne eine obere Platte, wiederum ohne Estrichmaterial.
- Fig. 4:: einen ersten Vertikalschnitt entlang der Linie IV - IV durch das Fußbodenheizungssystem gemäß Fig. 3,
- Fig. 5:: einen zweiten Vertikalschnitt entlang der Linie V - V durch das Fußbodenheizungssystem gemäß Fig. 3 und
- Fig. 6:: eine Unteransicht des Fußbodenheizungssystems gemäß Fig. 3.

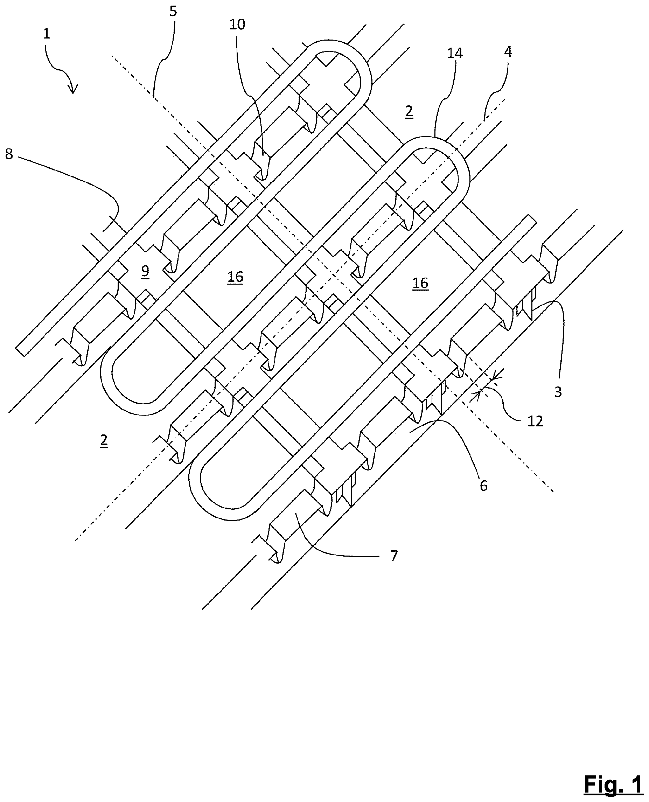

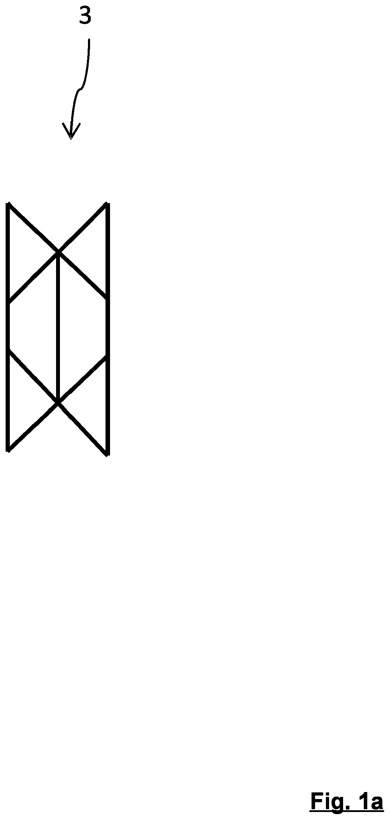

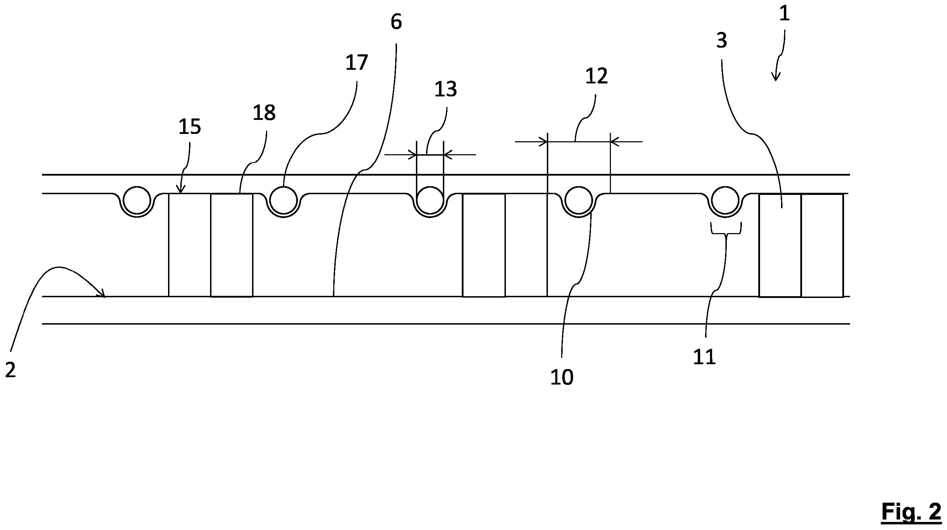

Eine in den Figuren 1 und 2 dargestellte Ausführungsform eines Fußbodenheizungssystems 1 umfasst eine aus thermoplastischem Kunststoffmaterial bestehende untere Platte 2 sowie darauf angeordnete in einem Horizontalschnitt kreuzförmige Stützen 3 (siehe Figur 1a), die in äquidistanten senkrecht zueinander verlaufenden Reihen 4 und 5 angeordnet sind und sich senkrecht aus einer von einer Oberseite 6 der unteren Platte 2 gebildeten Ebene nach oben erstrecken. Außerdem umfasst das Fußbodenheizungssystem 1 eine obere Platte, die von einem Gitter aus senkrecht zueinander verlaufenden Streifen 7, 8 gebildet wird, wobei die Streifen 7, 8 sich in Kreuzungsbereichen 9, in denen auch die Stützen 3 jeweils angeordnet sind, kreuzen. Die Streifen 7, 8 weisen jeweils in Abschnitten, die zwischen zwei benachbarten senkrecht zu dem gerade betrachteten Streifen 7, 8 verlaufenden Streifen 7, 8 angeordnet sind, jeweils zwei Aufnahmemittel 10 in Form bogenförmig sich nach unten auf die untere Platte 2 zu erstreckender Abschnitte 11 auf. Jeder bogenförmige Abschnitt 11 besitzt im Vertikalschnitt (s. Fig. 2) eine U-Form, wobei eine Öffnungsbreite 12 des U's einem Außendurchmesser 13 der in den Aufnahmemitteln 10 aufzunehmenden Heizungsrohre 14 entspricht, vorzugsweise ist die Öffnungsbreite 12 geringfügig kleiner als der Außendurchmesser 13, um ein Festklemmen der Heizungsrohre 14 in den Aufnahmemitteln 10 zu erreichen.

Während die untere Platte durch Ausschneiden aus einem großformatigen Plattenmaterial auf ein Plattenmaß zwischen ca. 500 x 500 mm und 2000 x 2000 mm (auch rechteckförmig möglich) hergestellt wird, erfolgt bei der Herstellung der oberen Platte 15 nach einem Ausschneiden aus einem großformatigen Plattenmaterial zunächst ein Ausschneiden bzw. Ausstanzen, der (später) quadratischen Durchbrüche 16, die jeweils von sich kreuzenden und parallel zueinander verlaufenden Streifen 7, 8 begrenzt werden. Zunächst sind die Kantenlängen der Durchbrüche 16 um ein solches Maß größer als bei der fertigen oberen Platte 15, als durch das spätere Ausformen der bogenförmigen Abschnitte 11 als Aufnahmemittel 10 eine Verkürzung der Streifenlängen eintritt. Somit ist also zunächst die gestreckte Länge der Streifen 7, 8 bei gedachter Rückformung von der Gestalt mit den bogenförmigen Abschnitten 11 zu bestimmen. Die Ausformung der bogenförmigen Abschnitte 11 erfolgt sodann durch Tiefziehen, wobei sich das thermoplastische Material der Streifen 7, 8 dauerhaft in die Form mit den bogenförmigen Abschnitten 11 begibt. Damit die bogenförmigen Abschnitte 11 einen hinreichenden Abstand von der Oberseite weg zu der unteren Platte 2 besitzen, befindet sich unter allen Kreuzungsbereichen 9 der oberen Platte 15, jeweils eine Stütze 3, die entweder nur mit der oberen Platte 15 oder nur mit der unteren Platte 2 oder sowohl mit der oberen Platte 15 als auch mit der unteren Platte 2 verbunden sein kann, z.B. jeweils durch Klick- oder Schnappverbindungen. Die Verbindung zwischen den Stützen 3 und der unteren Platte 2 bzw. der oberen Platte 15 kann auch vorzugsweise durch Kunststoffschweißen z.B. mittels Ultraschall oder Laser erfolgen. Auch die Stützen sollten aus diesem Grunde aus einem thermoplastischen Material bestehen, vorzugsweise aus demselben Material wie die untere Platte 2 und die obere Platte 15. Sofern die untere Platte 2 und die obere Platte 15 gemeinsam mit den Stützen 3 eine Einheit bilden, ist die Verlegung des Fußbodenheizungssystems besonders einfach. Es versteht sich, dass zum Auslegen eines Raumes oder eines Teiles desselben eine Vielzahl von Platten in beide Raumrichtungen der Fußbodenebene nebeneinander gelegt werden müssen, um eine vollständige Überdeckung zu erreichen. In Randbereichen oder Ecken können die Platten mit den üblichen Werkzeugen (Messer, Sägen, etc. auf Maß geschnitten werden.

Nach Bedeckung der Fläche, in der das Fußbodenheizungssystem 1 verlegt werden soll, mit den unteren Platten 2, den Stützen 3 und den oberen Platten 15, werden die Heizungsrohre 14 je nach dem gewünschten Verlegemuster verlegt, d.h. in den entsprechenden Aufnahmemitteln 10 fixiert. Als letzter Arbeitsschritt erfolgt nunmehr die Einbringung des in den Fig. 1 und 2 nicht dargestellten Estrichmaterials, das großflächig durch die Durchbrüche zwischen den Streifen 7, 8 eingebracht werden kann und sich unterhalb der Streifen 7, 8 unterhalb der Heizungsrohre 14 und oberhalb der unteren Platte 2 gleichmäßig verteilen kann und sämtliche Freiräume in den vorgenannten Bereich ausfüllen kann. Da im vorliegenden Fall die Oberseiten 17 der Heizungsrohre 14 und die Oberseiten 18 der Streifen 7, 8 der oberen Platte 15 ungefähr eine gemeinsame Ebene bilden, lässt sich das Estrichmaterial dort besonders einfach in dieser Ebene abziehen.

Die Heizungsrohre 14 sind in diesem Fall nach Fertigstellung des Fußbodenheizungssystems 1 "gerade so" mit Estrichmaterial bedeckt, wodurch eine sehr schnelle Wärmeabgabe von den Heizungsrohren 14 an den darüber befindlichen Fertigfußbodenbelag (z.B. Parkett, Fliesen, Linoleum etc.) erfolgen kann.

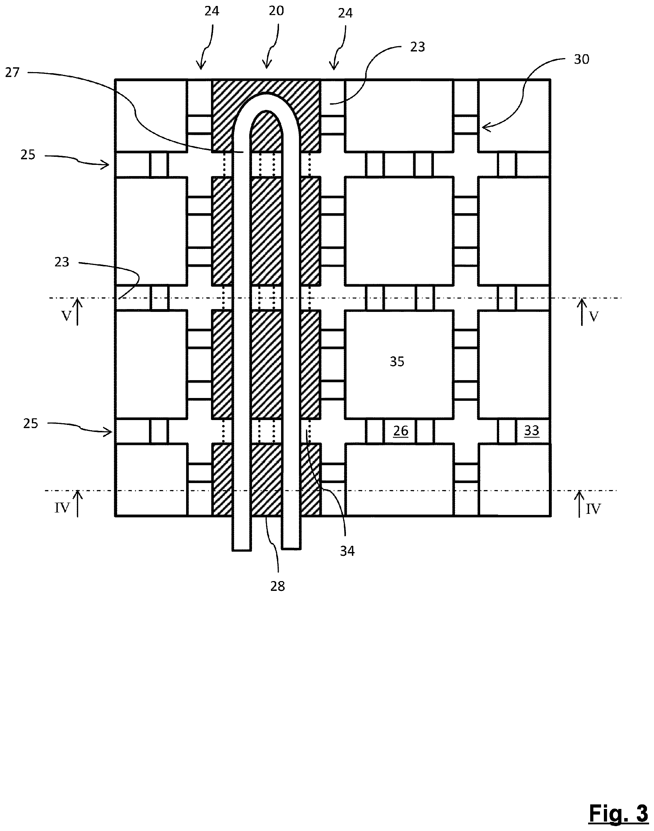

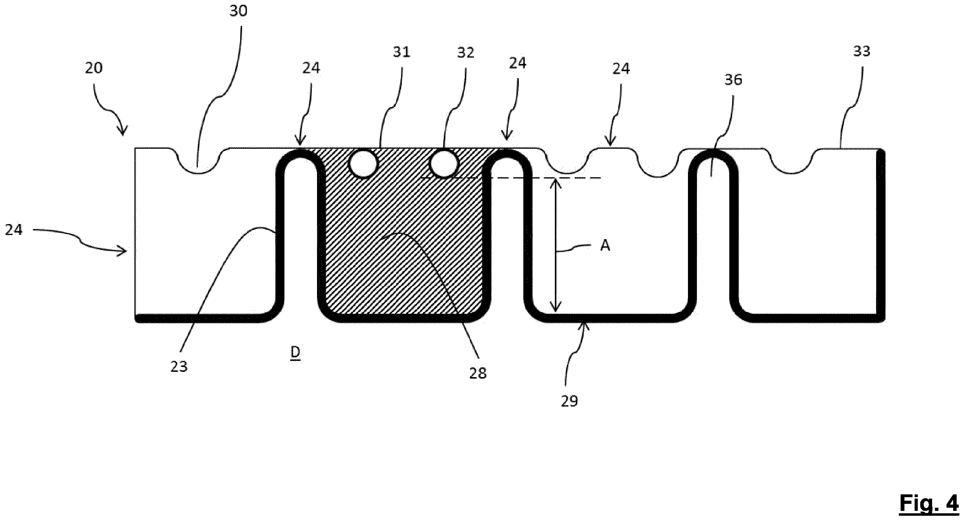

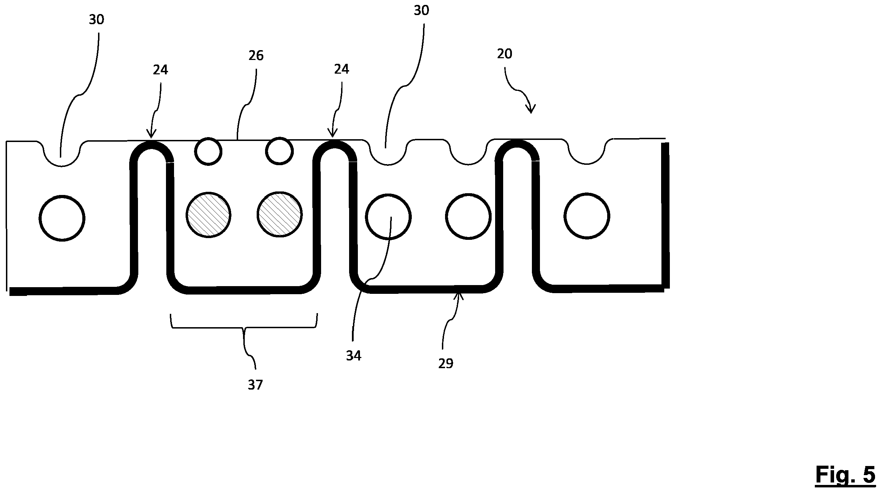

Bei einem in den Fig. 3 bis 6 veranschaulichten zweiten Ausführungsbeispiel eines Fußbodenheizungssystems 20 ist eine untere Platte 22 als integrales Tiefziehbauteil ausgeführt, in dem die Abstandhalter als sich kreuzende Reihen von 24, 25 von Rippen 23 ausgeformt sind. Wie aus den Querschnittszeichnungen gemäß Figuren 4 und 5 erkennbar ist, sind die Rippen 23 hohl und von einer Unterseite 29 der unteren Platte 22 offen, wohingegen sie zu einer Oberseite 26 der unteren Platte 22 hin geschlossen sind. Abgesehen von weiter unten erläuterten Durchbrüchen 34 besteht an keinen weiteren Stellen der unteren Platte 22 eine Verbindung für eine Durchtrittsmöglichkeit von der Oberseite zu der Unterseite.

Wie sich aus der Draufsicht gemäß Figur 3 ergibt, sind in den Rippen 23 Aufnahmemittel 30 in Form von U-förmigen Einsenkungen vorhanden, die ebenfalls während des Tiefziehvorgangs ausgeformt werden. Die Aufnahmemittel 30 dienen zur Aufnahme von Heizungsrohren 27, die z.B. mäanderförmig (wie in Figur 3 zwischen zwei benachbarten Reihen 24 veranschaulicht) eingelegt, vorzugsweise eingeclipst, und dadurch fixiert werden.

Der Anschaulichkeit halber ist in Figur 3 zwischen zwei Reihen 24, in denen die Heizungsrohre 27 angeordnet sind, ein Estrichmaterial 28, das schraffiert dargestellt ist, veranschaulicht. Das Estrichmaterial 28 füllt quaderförmige Becken zwischen vier dieses umschließende Reihen 24, 25 aus und bettet die Heizungsrohre 27 vollständig ein, wobei eine Oberseite 31 des Estrichmaterials bündig mit einer Oberseite 32 der Heizungsrohre 27 sowie einer Oberseite 33 der unteren Platte 22 abschließt.

Um einen besseren Verbund des Estrichmaterials und die Ausbildung eines zusammenhängenden Estrichkörpers in Form einer Estrichschicht zu erreichen, befinden sich in den Rippen 23 eine Vielzahl von Durchbrüchen 34 in horizontale Richtung, die sich in beiden sich kreuzenden Reihen 24, 25 der Rippen 23 und dort jeweils unterhalb der Aufnahmemittel 30 für die Heizungsrohre 27 befinden. Estrichmaterial kann durch diese Durchbrüche 34 von einem Becken 35 in ein benachbartes Becken 35 fließen, wobei auch Hohlräume 36 der Rippen 23 bis zur Oberseite einer nicht dargestellten Unterkonstruktion mit Estrichmaterial aufgefüllt werden können und sollten.

In den Figuren 3 und 4 ist das Estrichmaterial zwischen zwei Reihen 24 von Rippen 23 dargestellt, in Figur 4 der Einfachheit halber allerdings nicht in den Durchbrüchen 34 in diesen Reihen 24, durch die das Material in den Hohlraum 36 der Rippen 23 fließen könnte und diese zumindest bis zu einer Oberkante der Durchbrüche 34 ausfüllen könnte. In Figur 5 sind zwischen den betreffenden Reihen 24 zwei "Estrichkerne" gezeigt, die sich zwischen benachbarten Becken 35 erstrecken und für den erforderlichen Verbund in der Estrichschicht sorgen.

Während sich der Schnitt gemäß Figur 4 im Bereich von Becken 35 befindet, liegt der Schnitt gemäß Figur 5 im Bereich einer Rippe 23 und verläuft parallel zu deren Mittelachse.

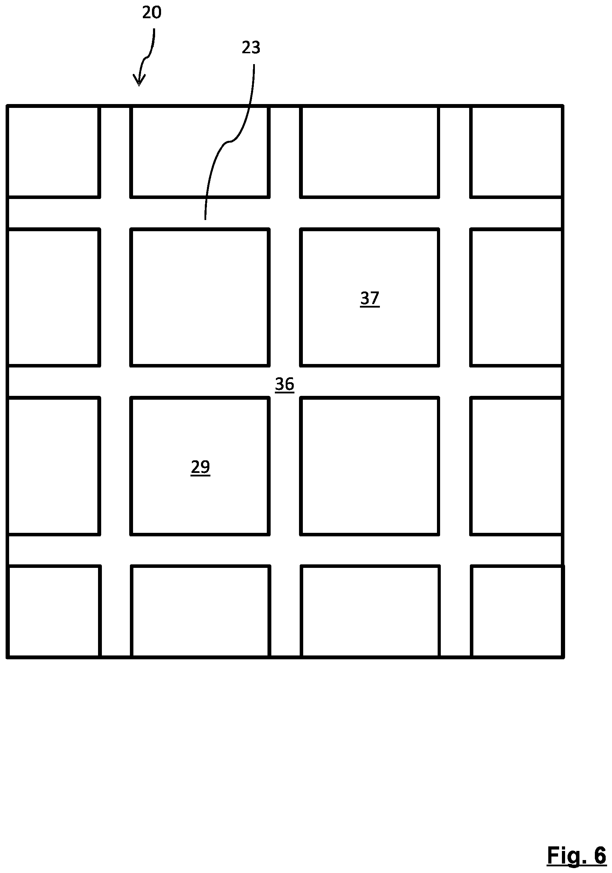

Aus der Ansicht der Unterseite gemäß Figur 6 der unteren Platte 22 ergibt sich, dass sich letztere mit Feldern 37 auf einer Unterkonstruktion in Form einer Dämmschicht abstützt, wohingegen die Hohlräume 36 in den Rippen 23 die Felder 37 begrenzen und voneinander abtrennen.

### Bezugszeichenliste

- 1: Fußbodenheizungssystem
- 2: untere Platte
- 3: Stütze
- 4: Reihe
- 5: Reihe
- 6: Oberseite
- 7: Streifen
- 8: Streifen
- 9: Kreuzungsbereich
- 10: Aufnahmemittel
- 11: bogenförmiger Abschnitt
- 12: Öffnungsbreite
- 13: Außendurchmesser
- 14: Heizungsrohr
- 15: obere Platte
- 16: Durchbruch
- 17: Oberseite
- 18: Oberseite
- 20: Fußbodenheizungssystem
- 22: untere Platte
- 23: Rippe
- 24: Reihe
- 25: Reihe
- 26: Oberseite
- 27: Heizungsrohr
- 28: Estrichmaterial
- 29: Unterseite
- 30: Aufnahmemittel
- 31: Oberseite
- 32: Oberseite
- 33: Oberseite
- 34: Durchbruch
- 35: Becken
- 36: Hohlraum
- 37: Feld

- A: Abstand
- D: Dämmschicht

## Patentansprüche

1. Fußbodenheizungssystem (1, 22) umfassend
- eine untere Platte (2, 22) aus Kunststoff zur Abstützung auf einer Unterkonstruktion,
- eine die Unterkonstruktion bildende Dämmschicht (D),
- eine Mehrzahl von sich auf der unteren Platte (2, 22) abstützenden Abstandhaltern,
- mindestens ein Heizungsrohr (14, 27), das mit mehreren Abstandhaltern so verbunden ist, dass zwischen einer Unterseite des mindestens einen Heizungsrohrs (14, 27) und einer Oberseite (6) der unteren Platte (2, 22) ein Abstand (A) zwischen 30 mm und 60 mm, vorzugsweise zwischen 35 mm und 45 mm besteht,
- eine Estrichschicht, die Freiräume oberhalb der Oberseite (6) der unteren Platte (2, 22) sowie zwischen den Abstandhaltern und dem Heizungsrohr bzw. den Heizungsrohren (14, 27) so ausfüllt, dass das Heizungsrohr bzw. die Heizungsrohre (14, 27) zumindest im Wesentlichen vollständig in die Estrichschicht eingebettet sind,
**gekennzeichnet durch**
- Aufnahmemittel (10, 30) der Abstandhalter, mit denen das Heizungsrohr bzw. die Heizungsrohre (14 27) so positionierbar sind, dass ihre Oberseiten mit Hochpunkten oder Hochbereichen der Abstandhalter bündig sind oder über Hochpunkte oder Hochbereiche der Abstandhalter nach oben vorstehen.

2. Fußbodenheizungssystem nach Anspruch 1, **dadurch gekennzeichnet, dass** die Aufnahmemittel (10, 30) Aussparungen in den Abstandhaltern sind, die einem Querschnitt des Heizungsrohrs bzw. der Heizungsrohre (14, 27) angepasst sind.

3. Fußbodenheizungssystem nach Anspruch 1 oder 2, **dadurch gekennzeichnet, dass** die Abstandhalter rippen- oder stegförmig und in zueinander parallelen Reihen angeordnet sind, wobei vorzugsweise die Heizungsrohre (14, 27) einer ersten Gruppe von zueinander parallelen Reihen (4, 5) senkrecht zu den Heizungsrohren (14, 27) einer zweiten Gruppe von zueinander parallelen Heizungsrohren (14, 27) ausgerichtet sind und die Reihen (4, 5) der beiden Gruppen in Kreuzungsbereichen (9) miteinander verbunden sind.

4. Fußbodenheizungssystem nach einem der Ansprüche 1 bis 3, **gekennzeichnet durch** eine obere Platte (15), vorzugsweise aus Kunststoff oder Metall, insbesondere Aluminium, die sich mittels Stützen (3) auf der unteren Platte (2) abstützt und gitterförmig verlaufende Streifen (7, 8) aufweist, die Durchbrüche begrenzen und die Aufnahmemittel (10) aufweisen, wobei die obere Platte (15) und die Stützen (3) gemeinsam die Abstandhalter bilden.

5. Fußbodenheizungssystem nach Anspruch 4, **dadurch gekennzeichnet, dass** die Aufnahmemittel (10) bogenförmig, insbesondere U-förmig verlaufende Abschnitte der Streifen (7, 8) sind.

6. Fußbodenheizungssystem nach einem der Ansprüche 1 bis 5, **dadurch gekennzeichnet, dass** die Abstandhalter insgesamt oder die Stützen (3) einstückig mit der unteren Platte (2, 22) verbunden sind und die gegebenenfalls vorhandene obere Platte (15), insbesondere formschlüssig, mit den Stützen (3) verbunden ist.

## Claims

1. An underfloor-heating system (1,22) including
- a lower plate (2,22) made of plastic for support on a substructure,
- an insulating layer (D) forming the substructure,
- a plurality of spacers supporting themselves against the lower plate (2,22),
- at least one heating pipe (14, 27), which is connected to a number of spacers in such a way that a distance (A) between 30 mm and 60 mm, preferably between 35 mm and 45 mm, exists between an underside of the at least one heating pipe (14, 27) and a topside (6) of the lower plate (2, 22),
- a screed layer, which fills free spaces above the topside (6) of the lower plate (2, 22) as well as between the spacers and the one or more heating pipes (14, 27) in such a way that the one or more heating pipes (14, 27) are at least essentially completely embedded in the screed layer,
**characterised by**
- receiving means (10, 30) of the spacers, with which the one or more heating pipes (14, 27) can be positioned such that their topsides are flush with high points or high areas of the spacers or protrude upwards past high points or high areas of the spacers.

2. The underfloor-heating system according to claim 1, **characterised in that** the receiving means (10, 30) are recesses in the spacers, which are adapted to suit a cross-section of the one or more heating pipes (14, 27) .

3. The underfloor-heating system according to claim 1 or 2, **characterised in that** the spacers are arranged in a rib-like or strut-like fashion and in rows parallel to each other, wherein preferably the heating pipes (14, 27) of a first group of rows (4, 5) parallel to each other are aligned vertically to the heating pipes (14, 27) of a second group of heating pipes (14, 27) parallel to each other and the rows (4, 5) of the two groups are connected to each other in intersecting areas (9).

4. The underfloor-heating system according to one of claims 1 - 3, **characterised by** an upper plate (15), preferably made of plastic or metal, in particular aluminium, which is supported against the lower plate (2) by means of supports (3) and comprises strips (7, 8) extending in a grid-like fashion, which delimit breakthroughs and comprise the receiving means (10), wherein the upper plate (15) and the supports (3) together form the spacers.

5. The underfloor-heating system according to claim 4, **characterised in that** the receiving means (10) are sections of the strips (7, 8) which extend in an arcuate, in particular U-shaped fashion.

6. The underfloor-heating system according to one of claims 1 - 5, **characterised in that** the spacers as a whole or the supports (3) are integrally bonded to the lower plate (2, 22), and the upper plate (15), if present, is connected, in particular form-locked with the supports (3).

## Revendications

1. Système de chauffage par le sol (1, 22) comprenant
- une plaque inférieure (2, 22) en matière plastique pour appui sur une sous-structure,
- une couche isolante (D) formant la sous-structure,
- une pluralité d'écarteurs s'appuyant sur la plaque inférieure (2, 22),
- au moins un tuyau de chauffage (14, 27), qui est relié à plusieurs écarteurs de telle manière qu'entre un côté inférieur d'au moins un tuyau de chauffage (14, 27) et un côté supérieur (6) de la plaque inférieure (2, 22), il y a un intervalle (A) se situant entre 30 mm et 60 mm, de préférence entre 35 mm et 45 mm,
- une couche de chape, qui remplit les espaces libres au-dessus du côté supérieur (6) de la plaque inférieure (2, 22) ainsi qu'entre les écarteurs et le tuyau de chauffage ou les tuyaux de chauffage (14, 27) de telle manière que le tuyau de chauffage ou les tuyaux de chauffage (14, 27) sont au moins pour l'essentiel complètement encastrés dans la couche de chape,
**caractérisé par**
- des moyens de réception (10, 30) des écarteurs avec lesquels le tuyau de chauffage ou les tuyaux de chauffage (14, 27) peuvent être positionnés de telle manière que leurs côtés supérieurs viennent affleurer les points hauts ou les zones hautes des écarteurs ou font saillie vers le haut sur les points hauts ou zones hautes.

2. Système de chauffage par le sol selon la revendication 1, **caractérisé en ce que** les moyens de réception (10, 30) sont des évidements dans les écarteurs, qui sont adaptés à une section du tuyau de chauffage ou des tuyaux de chauffage (14, 27).

3. Système de chauffage par le sol selon la revendication 1 ou 2, **caractérisé en ce que** les écarteurs sont en forme de nervures ou de barrettes et disposées en rangées parallèles les unes aux autres, sachant de préférence que les tuyaux de chauffage (14, 27) d'un premier groupe de rangées (4, 5) parallèles les unes aux autres sont orientés perpendiculairement aux tuyaux de chauffage (14, 27) d'un deuxième groupe de tuyaux de chauffage (14, 27) parallèles les uns aux autres et les rangées (4, 5) des deux groupes sont reliées entre eux dans les zones de croisement (9).

4. Système de chauffage par le sol selon l'une quelconque des revendications 1 à 3, **caractérisé par** une plaque supérieure (15), de préférence en matière plastique ou en métal, en particulier en aluminium, qui s'appuie au moyen des supports (3) sur la plaque inférieure (2) et comporte des bandes (7, 8) passant en forme de treillis, qui délimitent des passages et comportent les moyens de réception (10), sachant que la plaque supérieure (15) et les supports (3) forment ensemble les écarteurs.

5. Système de chauffage par le sol selon la revendication 4, **caractérisé en ce que** les moyens de réception (10) sont des sections des bandes (7, 8), passant en forme d'arc, en particulier en forme de U.

6. Système de chauffage par le sol selon l'une quelconque des revendications 1 à 5, **caractérisé en ce que** les écarteurs sont reliés au total ou les supports (3) en une pièce à la plaque inférieure (2, 22) et la plaque supérieure (15) existant le cas échéant, est reliée en particulier par conformité de forme, aux supports (3).
